# EUROPÄISCHE PATENTSCHRIFT

(11) **EP 1 941 166 B1**
(45) Veröffentlichungstag und Bekanntmachung des Hinweises auf die Patenterteilung: **14.12.2011**
(21) Anmeldenummer: 06793711.0
(22) Anmeldetag: 21.09.2006
(51) Int. Cl.: F16B 5/02

(54) **BAUGRUPPE AUS EINER HALTEVORRICHTUNG ZUR BEFESTIGUNG EINER FAHRZEUGBAUGRUPPE AN EINEM HALTER UND EINEM GEHÄUSE**
ASSEMBLY HAVING A MAINTAINING DEVICE FOR FIXING A MOTOR VEHICLE ASSEMBLY WITH A HOLDER AND A HOUSING
MODULE COMPORTANT UN DISPOSITIF DE RETENUE POUR FIXER UN MODULE DE VEHICULE A UN SUPPORT ET UNE BOITE

(30) Priorität: 04.10.2005 DE 102005047356
(43) Veröffentlichungstag der Anmeldung: 09.07.2008
(73) Patentinhaber: ROBERT BOSCH GMBH, 70442 Stuttgart (DE)
(72) Erfinder: WEH, Andreas, 87477 Sulzberg (DE); MCCORMICK, Nathan, Advance, North Carolina NC27006 (US)
(86) Internationale Anmeldenummer: PCT/EP2006/066589
(87) Internationale Veröffentlichungsnummer: WO 2007/039476

(56) Entgegenhaltungen:
- EP-A- 1 491 773
- WO-A-02/10610

## Beschreibung

### Stand der Technik

Die Erfindung geht aus von einer Baugruppe aus einer Haltevorrichtung zur Befestigung einer Fahrzeugbaugruppe an einem Halter, und einem Gehäuse nach der Gattung des unabhängigen Patentanspruchs 1. Eine derartige Baugruppe ist aus der WO 02/10610 A1 bekannt.

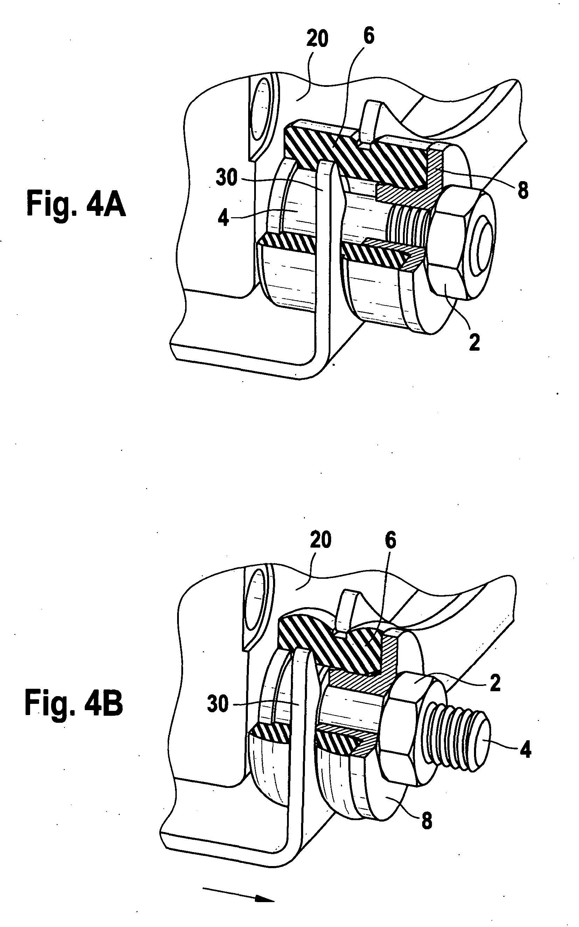

Eine gattungsgemäße Baugruppe in einem Kraftfahrzeug zur Befestigung eines Gehäuses 20 einer Hydraulikeinheit an einem Halter 30 ist in Figur 4 dargestellt. Wie aus Figur 4 ersichtlich ist, umfasst die herkömmliche Baugruppe eine Haltevorrichtung, eine Mutter 2, einen Bolzen 4, ein elastisches Dämpfungselement 6 und eine Anschlaghülse 8, wobei der Bolzen 4 mit einem hohen Einpressdruck in eine Bohrung im Gehäuse 20 eingepresst wird und das elastische Dämpfungselement 6 auf den Bolzen 4 beweglich aufgeschoben wird. Figur 4A zeigt die Haltevorrichtung im Ausgangszustand, d.h. die Mutter 2 ist nur auf den Bolzen 6 aufgesetzt und nicht angezogen. Figur 4B zeigt die Haltevorrichtung im Befestigungszustand, d.h. die Mutter 2 ist mit einem Drehmoment angezogen und hat das elastischen Dämpfungselement 8 über die Anschlaghülse 8 bis zum Anschlag der Anschlaghülse 8 gequetscht. Beim Anziehen der Mutter 2 bewegt sich die Hydraulikeinheit 20 in Pfeilrichtung und wird durch das wirkende Drehmoment am Halter 30 befestigt.

### Vorteile der Erfindung

Die erfindungsgemäße Baugruppe mit den Merkmalen des unabhängigen Patentanspruchs 1 hat demgegenüber den Vorteil, dass die wesentlichen Komponenten der Haltevorrichtung, wie eine Mutter, ein Bolzen und ein elastisches Dämpfungselement, als Vorbaugruppe vormontiert sind, welche in eine vorbereitete Bohrung eines Gehäuses, insbesondere einer Fahrzeugbaugruppe einfügbar ist. Da das vom Bolzen getragene elastische Dämpfungselement nach dem Einfügen in die vorbereitete Gehäusebohrung vollständig im Gehäuse der Fahrzeugbaugruppe liegt, wird in vorteilhafter Weise die Körperschalldämpfung verbessert und die Resonanz reduziert. Zudem ergeben sich durch die vormontierte Vorgruppe in vorteilhafter Weise geringere Montagezeiten beim Einbau ins Fahrzeug und dadurch geringere Produktionskosten. Da die Haltevorrichtung mit geringeren Einpresskräften als herkömmliche Haltevorrichtungen mit dem Gehäuse der Fahrzeugbaugruppe verbunden werden kann, kann die Haltevorrichtung vor Ort einfach an verschiedene vom Kunden verwendete Halter angepasst werden.

Durch die in den abhängigen Ansprüchen aufgeführten Maßnahmen und Weiterbildungen sind vorteilhafte Verbesserungen der im unabhängigen Patentanspruch angegebenen Baugruppe möglich.

Besonders vorteilhaft ist, dass der Bolzen mit einem Einstich ausgebildet ist, welcher einen Formschluss mit dem aufgesteckten Dämpfungselement ergibt. Dadurch wird in vorteilhafter Weise ein Abrutschen des aufgesteckten Dämpfungselements verhindert.

Um ein Verschieben des Dichtelements beim Einführen in die vorbereitete Bohrung zu verhindern, ist in vorteilhafter Weise an den Bolzen ein Anschlagkragen für das Dichtelement angeformt.

Zur Verstemmung der Vorbaugruppe mit dem Gehäuse ist das Gehäusematerial um die Bohrung plastisch verformbar ausgeführt, so dass beim Einführen der Vorbaugruppe in die vorbereitete Bohrung in vorteilhafter Weise eine axiale Fixierung ohne zusätzliche Teile realisierbar ist. Zudem ergeben sich durch die Verwendung des plastisch verformbaren Materials geringere Einpresskräfte.

Die plastische Verformung des Gehäusemateriales und damit der entsprechende Formschluss werden beispielsweise segmentweise oder über einen vollständigen Ring hergestellt.

Die Haltevorrichtung kann beispielsweise zur Befestigung einer als Hydraulikeinheit, vorzugsweise als Hydraulikpumpe, ausgeführten Fahrzeugbaugruppe an einem Halter verwendet werden, welcher beispielsweise als Haltebügel oder als Haltewinkel ausgeführt ist.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: perspektivische schematische Darstellungen von Einzelkomponenten und von einer Vorbaugruppe einer zur Erfindung gehörenden Haltevorrichtung,
- Figur 2: einen Längsschnitt durch die Haltevorrichtung,
- Figur 3: eine perspektivische Darstellung einer Baugruppe mit Haltevorrichtung, und
- Figur 4: perspektivische Darstellungen einer herkömmlichen Haltevorrichtung für eine Fahrzeugbaugruppe.

### Beschreibung

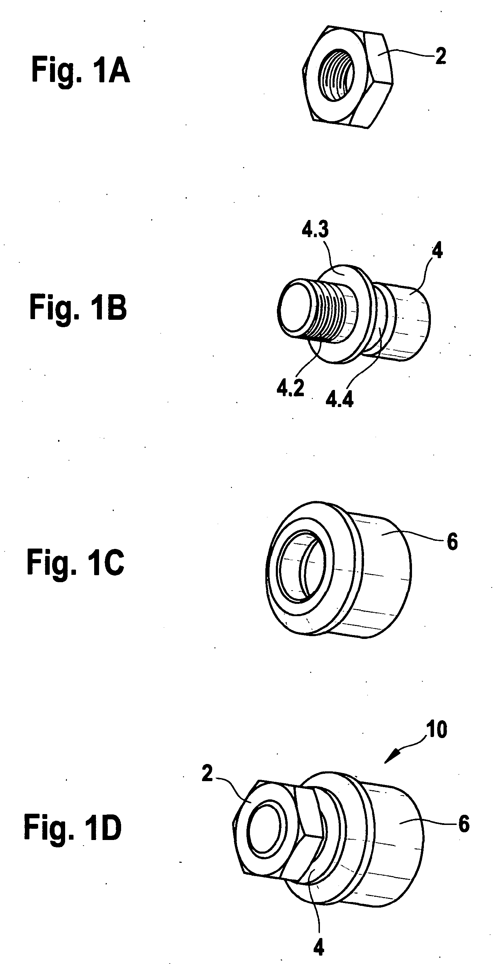

Wie aus Figur 1 ersichtlich ist, umfasst die Haltevorrichtung eine in Figur 1A dargestellte Mutter 2, einen in Figur 1B dargestellten Bolzen 4 und ein in Figur 1C dargestelltes Dämpfungselement 6, welche zu einer in Figur 1D dargestellten Vorbaugruppe 10 vormontiert werden. Zur Vormontage ist der Bolzen 4 mit einem Einstich 4.4 ausgebildet, welcher einen Formschluss mit dem aufgesteckten Dämpfungselement 6 ergibt, wodurch ein Abrutschen des Dämpfungselements 6 vom Bolzen 4 verhindert wird. Zudem wird die Mutter 2 auf einen Gewindeteil 4.2 des Bolzens 4 aufgeschraubt. Um ein Verschieben des Dichtelements 6 beim Einführen in eine vorbereitete Bohrung 22 zu verhindern, ist an den Bolzen 4 ein Anschlagkragen 4.3 für das Dichtelement 6 angeformt.

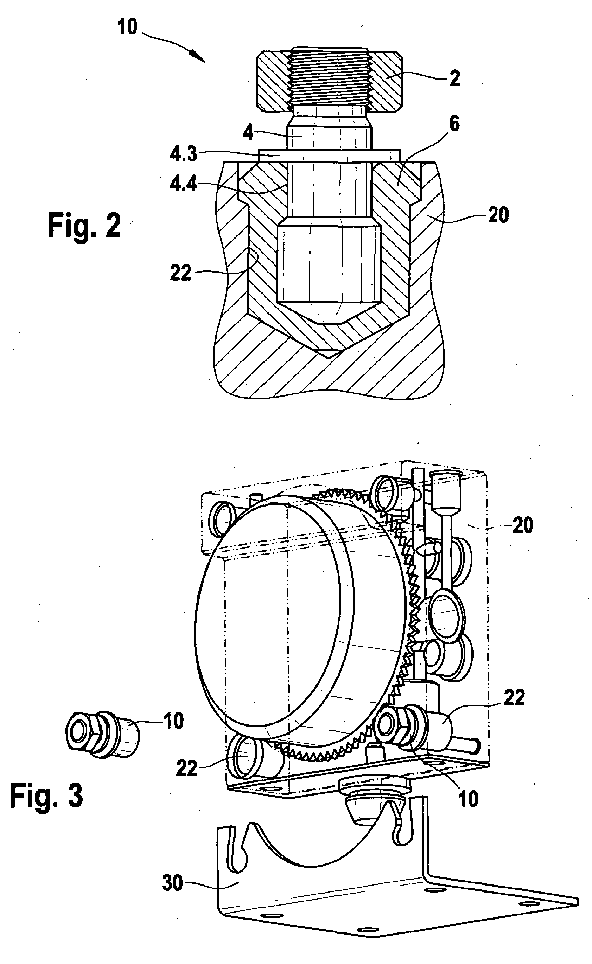

Figur 2 zeigt die in eine vorbereitete Bohrung 22 im Gehäuse 20 einer Fahrzeugbaugruppe eingefügte Vorbaugruppe 10. Wie aus Figur 2 ersichtlich ist, liegt das vom Bolzen 4 getragene Dämpfungselement 6 im dargestellten Ausführungsbeispiel vollständig in der Bohrung 22 im Gehäuse 20 der zu befestigenden Fahrzeugbaugruppe. Das Gehäusematerial um die Bohrung 22 wird beim Einführen der Vorbaugruppe 10 in die Bohrung 22 plastisch verformt, wodurch die Vorbaugruppe 10 mit dem Gehäuse 20 verstemmt und axial gehalten wird. Im dargestellten Ausführungsbeispiel werden die plastische Verformung des Gehäusematerials und damit der entsprechende Formschluss segmentweise hergestellt.

Bei einer alternativen nicht dargestellten Ausführungsform der erfindungsgemäßen Haltvorrichtung werden die plastische Verformung des Gehäusematerials und damit der entsprechende Formschluss über einen vollständigen Ring hergestellt.

Figur 3 zeigt eine perspektivische Darstellung einer als Hydraulikpumpe ausgeführten Fahrzeugbaugruppe 20. Die dargestellte Hydraulikpumpe 20 wird mit zwei Vorbaugruppen 10, welche in vorbereitete Bohrungen 22 im Gehäuse 20 eingefügt werden, an einem Halter 30 befestigt. In der Darstellung gemäß Figur 3 ist eine erste Vorbaugruppe 10 bereits in eine entsprechende Bohrung 22 in der rechten Seite des Gehäuses 20 der Hydraulikpumpe eingefügt, während eine zweite Vorbaugruppe 10 noch nicht in die entsprechende Bohrung 22 in der linken Seite des Gehäuses 20 eingefügt ist. Nach dem Einfügen der Vorbaugruppen 10 in die entsprechenden Bohrungen 22 im Gehäuse 20 der Hydraulikpumpe, wird das Gehäuse 20 mittels den über den Gehäuserand vorstehenden Teil der Bolzen 4 in entsprechende Führungsschlitze des Halters 30 eingeführt und durch Anziehen der auf den Gewindeteil 4.2 des Bolzen aufgesetzten Mutter mit einem vorgegebenen Drehmoment am Halter 30 befestigt.

Durch die Haltevorrichtung mit einem im Gehäuse liegenden Dämpfungselement kann die herkömmliche Haltevorrichtung mit Einpressbolzen mit aufgeschobenem Dämpfungselement ersetzt werden, wodurch die Körperschalldämpfung verbessert und die Resonanz reduziert wird. Zudem kann durch den angeformten Kragen am Bolzen auf die Anschlaghülse verzichtet werden. Die Vorbaugruppe umfasst in vorteilhafte Weise alle Teile, einschließlich der Mutter als Befestigungselement, welche zur Befestigung der Hydraulikeinheit am entsprechenden Halter erforderlich sind, wodurch die Montagezeit verkürzt und damit die Produktionskosten reduziert werden können.

## Patentansprüche

1. Baugruppe aus einer Haltevorrichtung zur Befestigung einer Fahrzeugbaugruppe an einem Halter (30), und einem Gehäuse (20), wobei die Haltevorrichtung eine Mutter (2), einen Bolzen (4) und ein Dämpfungselement (6) aufweist, die als Vorbaugruppe (10) vormontiert sind, wobei diese Vorbaugruppe in eine vorbereitete Bohrung (22) des Gehäuses (20) eingefügt ist und wobei das Dämpfungselement (6) vom Bolzen (4) getragen ist, **dadurch gekennzeichnet,**
**dass** das Dämpfungselement (6) in der vorbereiteten Bohrung (22) des Gehäuses (20) aufgenommen ist.

2. Baugruppe nach Anspruch 1, **dadurch gekennzeichnet, dass** der Bolzen (4) mit einem Einstich (4.4) ausgebildet ist, welcher einen Formschluss mit dem aufgesteckten Dämpfungselement (6) ergibt.

3. Baugruppe nach Anspruch 1 oder 2, **dadurch gekennzeichnet, dass** am Bolzen (4) ein Anschlagkragen (4.3) für das Dämpfungselement (6) angeformt ist

4. Baugruppe nach einem der Ansprüche 1 bis 3, **dadurch gekennzeichnet, dass** das Gehäusematerial um die Bohrung (22) beim Einführen der Vorbaugruppe (10) plastisch verformbar ist, wodurch die Vorbaugruppe (10) mit dem Gehäuse (20) verstemmbar ist.

5. Baugruppe nach Anspruch 4, **dadurch gekennzeichnet, dass** die plastische Verformung des Gehäusematerials und damit der entsprechende Formschluss segmentweise herstellbar ist.

6. Baugruppe nach Anspruch 4, **dadurch gekennzeichnet, dass** die plastische Verformung des Gehäusematerials und damit der entsprechende Formschluss über einen vollständigen Ring herstellbar ist.

7. Baugruppe nach einem der Ansprüche 1 bis 6, **dadurch gekennzeichnet, dass** die Fahrzeugbaugruppe als Hydraulikeinheit, vorzugsweise als Hydraulikpumpe ausgeführt ist.

## Claims

1. Assembly comprising a retaining device for fixing a vehicle assembly to a holder (30), and a housing (20), wherein the retaining device has a nut (2), a bolt (4) and a damping element (6), which are preassembled as a preassembled unit (10), wherein said preassembled unit is fitted into a bore (22) provided in the housing (20), and wherein the damping element (6) is supported by the bolt (4), **characterized in that** the damping element (6) is accommodated in the bore (22) provided in the housing (20).

2. Assembly according to Claim 1, **characterized in that** the bolt (4) is formed with a recess (4.4) which produces a form-fitting connection with the plugged-on damping element (6).

3. Assembly according to Claim 1 or 2, **characterized in that** a stop collar (4.3) for the damping element (6) is integrally formed on the bolt (4).

4. Assembly according to one of Claims 1 to 3, **characterized in that** the housing material can be plastically deformed around the bore (22) upon insertion of the preassembled unit (10), as a result of which the preassembled unit (10) can be caulked to the housing (20).

5. Assembly according to Claim 4, **characterized in that** the plastic deformation of the housing material and therefore the corresponding form-fitting connection can be produced in segments.

6. Assembly according to Claim 4, **characterized in that** the plastic deformation of the housing material and therefore the corresponding form-fitting connection can be produced via a complete ring.

7. Assembly according to one of Claims 1 to 6, **characterized in that** the vehicle assembly is designed as a hydraulic unit, preferably as a hydraulic pump.

## Revendications

1. Module constitué d'un dispositif de retenue pour la fixation d'un module de véhicule sur un support (30), et d'un boîtier (20), le dispositif de retenue présentant un écrou (2), un boulon (4) et un élément d'amortissement (6) qui sont prémontés sous forme de pré-module (10), ce pré-module étant introduit dans un alésage préparé (22) du boîtier (20) et l'élément d'amortissement (6) étant porté par le boulon (4), **caractérisé en ce que** l'élément d'amortissement (6) est reçu dans l'alésage préparé (22) du boîtier (20).

2. Module selon la revendication 1, **caractérisé en ce que** le boulon (4) est réalisé avec une encoche (4.4) qui produit un engagement par coopération de forme avec l'élément d'amortissement (6) enfiché.

3. Module selon la revendication 1 ou 2, **caractérisé en ce qu'**un collier de butée (4.3) pour l'élément d'amortissement (6) est façonné sur le boulon (4).

4. Module selon l'une quelconque des revendications 1 à 3, **caractérisé en ce que** le matériau du boîtier peut être déformé plastiquement autour de l'alésage (22) lors de l'introduction du pré-module (10), de sorte que le pré-module (10) puisse être maté avec le boîtier (20).

5. Module selon la revendication 4, **caractérisé en ce que** la déformation plastique du matériau du boîtier et donc l'engagement par coopération de forme correspondant peuvent être réalisés de manière segmentée.

6. Module selon la revendication 4, **caractérisé en ce que** la déformation plastique du matériau du boîtier et donc l'engagement par coopération de forme correspondant peuvent être réalisés par le biais d'une bague complète.

7. Module selon l'une quelconque des revendications 1 à 6, **caractérisé en ce que** le module de véhicule est réalisé sous forme d'unité hydraulique, de préférence sous forme de pompe hydraulique.
